# FASCICULE DE BREVET EUROPEEN

(11) **EP 3 889 773 B1**
(45) Date de publication et mention de la délivrance du brevet: **15.02.2023**
(21) Numéro de dépôt: 21165018.9
(22) Date de dépôt: 25.03.2021
(51) Int. Cl.: H04L 9/40, G06F 9/46, G06F 9/50

(54) **PROCEDE ET SYSTEME DE DECOUVERTE ET D'ENREGISTREMENT DE NOUVEAUX MICROSERVICES POUR UNE PLATEFORME DE GOUVERNANCE UNIFIEE D'UNE PLURALITE DE SOLUTIONS DE CALCUL INTENSIF**
VERFAHREN UND SYSTEM ZUR ERFASSUNG UND REGISTRIERUNG NEUER MIKRODIENSTE FÜR EINE GEMEINSAME VERWALTUNGSPLATTFORM EINER VIELZAHL VON HPC-LÖSUNGEN
METHOD AND SYSTEM FOR DISCOVERY AND REGISTRATION OF NEW MICROSERVICES FOR A PLATFORM FOR UNIFIED GOVERNANCE OF A PLURALITY OF INTENSIVE CALCULATION SOLUTIONS

(30) Priorité: 27.03.2020 FR 2003058
(43) Date de publication de la demande: 06.10.2021
(73) Titulaire: Bull SAS, 78340 Les Clayes-sous-Bois (FR)
(72) Inventeur: CALEGARI, Patrice, 91790 Boissy-sous-Saint-Yon (FR); LEVRIER, Marc, 91410 Saint-Cyr-Sous-Dourdan (FR)
(74) Mandataire: Cabinet Camus Lebkiri

(56) Documents cités:
- WO-A1-2018/053122
- CN-A- 110 224 855
- US-A1- 2019 004 871
- US-B1- 9 838 376
- CHRISTINA TERESE JOSEPH ET AL: "Straddling the crevasse: A review of microservice software architecture foundations and recent advancements", SOFTWARE-PRACTICE AND EXPERIENCE, vol. 49, no. 10, 19 octobre 2019 (2019-10-19), pages 1448-1484, XP055761837, GB ISSN: 0038-0644, DOI: 10.1002/spe.2729
- NKOMO PETER ET AL: "Software Development Activities for Secure Microservices", 29 juin 2019 (2019-06-29), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 573 - 585, XP047512374, ISBN: 978-3-319-10403-4 [extrait le 2019-06-29] * page 576, ligne 16 - page 577, dernière ligne *
- Robert Ramac ET AL: "The Challenges of Developing a Multi-Domain Microservices Platform: The Case of REQSTER", Conference: 1st International Conference on Microservices, 1 octobre 2017 (2017-10-01), pages 1-5, XP055761819, Odense, Denmark Extrait de l'Internet: URL:https://www.researchgate.net/profile/V ladimir_Mandic2/publication/321716625_The_ Challenges_of_Developing_a_Multi-Domain_Mi croservices_Platform_The_Case_of_REQSTER/l inks/5a2d83b9a6fdccfbbf8989e1/The-Challeng es-of-Developing-a-Multi-Domain-Microservi ces-Platform-The-Case-of-REQSTER.pdf [extrait le 2020-12-21]

## Description

L'invention s'intéresse au domaine des calculs haute performance, et plus particulièrement à l'interfaçage à une même plateforme de plusieurs solutions de calcul intensif présentant différentes logiques métier. L'invention concerne notamment un procédé d'enregistrement de nouveaux microservices sur une plateforme centralisant l'accès à une pluralité de solutions de calcul intensif. En outre, l'invention concerne un système d'enregistrement de nouveaux microservices capable de gérer les enregistrements de nouveaux microservices, dans une plateforme centralisant l'accès à une pluralité de solutions de calcul intensif, sans avoir à arrêter la plateforme ni aucun service lui étant associée.

### [Art antérieur]

Le calcul haute performance, aussi appelé HPC (« High Performance Computing » en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en oeuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés noeuds ou serveurs) interconnectés par un réseau d'interconnexion pouvant réaliser des opérations communes. Le calcul à haute performance (HPC) est adopté par de plus en plus de scientifiques pour les aider à résoudre des problèmes complexes. En particulier, avec une augmentation entre 2017 et 2018 de plus de 50% de la puissance de l'ordinateur le plus puissant au monde, la puissance de calcul des supercalculateurs augmente sans cesse. De plus, il existe un nombre croissant de centres de calcul (locaux, régionaux, nationaux et internationaux) dotés de systèmes de classe pétaflopique. Etant donné qu'il n'est pas possible pour tous les utilisateurs d'investir dans les architectures informatiques capables de déployer de telles puissances de calcul, certains se sont spécialisés dans la fourniture d'accès à ces solutions de calcul haute performance.

Ainsi, ces dernières années ont vu l'apparition de plateformes d'accès à des solutions de calcul intensif (EP3109759). En particulier, de nombreux portails HPC ont été développés. Les portails internet sont une voie commune pour accéder à l'information et aux services disponibles sur les réseaux informatiques. Les portails offrent souvent un point d'accès unique aux données et aux applications. En outre, un portail peut présenter une vue unifiée et personnalisée d'informations aux utilisateurs.

De nombreux projets HPC développent leur propre portail Web spécifique à une communauté et certains fournisseurs de cloud HPC ont développé des portails Web pour leur propre usage. Les relations entre le portail et ces systèmes d'information et de stockage sont essentielles mais complexes à mettre en oeuvre de manière sécurisée et efficace. Les données traitées dans des environnements HPC peuvent être très confidentielles (en particulier pour les industries ou les organismes financiers). Les portails HPC doivent gérer ces contraintes dans la manière dont ils exécutent les services sur le serveur principal (via l'emprunt d'identité, c'est-à-dire qu'ils exécutent le service « en tant que » utilisateur authentifié), ainsi que dans la manière dont ils affichent ou filtrent les informations dans le portail HPC.

De plus, au-delà de la puissance de calcul et du calcul haute performance, les scientifiques utilisateurs souhaitent pouvoir accéder à des solutions de calcul intensif tels que des machines quantiques, de la simulation quantique, des plateformes de « Deep Learning » ou plus largement dédiées au développement de solutions d'intelligence artificielle.

Néanmoins, chacune de ces solutions est hébergée ou rendue accessible par des sociétés dédiées à l'une ou l'autre de ces technologies et l'utilisation notamment simultanée de ces différentes solutions de calcul intensif devient laborieuse.

En outre, de telles solutions centralisant des pluralités de solutions de calcul intensif se doivent d'être structurées de façon à permettre l'ajout ou la modification de services de façon sécurisée et transparente.

Ainsi, avec la multiplication des types de solutions de calcul intensif et la complémentarité de certaines de ces solutions, il apparait nécessaire de pouvoir disposer d'une plateforme capable d'héberger et d'enregistrer de nouveaux services de manière sécurisée et sans que cela nécessite l'arrêt et le redémarrage de la plateforme.

Le document CN 110224855 décrit un mécanisme de sécurisation des microservices enregistrés sur une plate-forme de fourniture de microservices. Le mécanisme de sécurisation n'est pas basé sur un système de jeton mais sur un système de code chiffré.

Le document US 2019/004871 décrit un système de sécurité à jetons mais il est utilisé pour accéder à un microservice et non pour l'enregistrer.

### [Problème technique]

L'invention a donc pour but de remédier aux inconvénients de l'art antérieur. En particulier, l'invention a pour but de proposer un procédé d'enregistrement d'un nouveau microservice sur une plateforme de gouvernance unifiée d'une pluralité de solutions de calcul intensif, ledit procédé permettant un enregistrement à chaud. L'invention a en outre pour but de proposer un système d'enregistrement d'un nouveau microservice sur une plateforme de gouvernance unifiée d'une pluralité de solutions de calcul intensif.

### [Brève description de l'inventionl

A cet effet, l'invention porte sur un procédé d'enregistrement de microservices dans une plateforme de gouvernance unifiée d'une pluralité de solutions de calcul intensif, lesdites solutions de calcul intensif comportant au moins deux solutions sélectionnées parmi : un serveur de calcul haute performance, un serveur dédié à l'apprentissage supervisé ou non supervisé, et un serveur dédié aux calculs quantiques ; la plateforme de gouvernance unifiée comportant : un microservice de sécurité à jeton, au moins un référentiel de sécurité, un module d'enregistrement, un registre de service ; ledit procédé d'enregistrement de microservice comportant les étapes de :
- Réception, par le microservice de sécurité à jeton, d'une demande de rattachement d'un nouveau microservice, ladite demande de rattachement comportant un identifiant unique du nouveau microservice ;
- Vérification, par le microservice de sécurité à jeton, de l'identifiant unique du nouveau microservice à partir d'informations mémorisées dans le référentiel de sécurité,
- Génération d'un jeton d'authentification et transmission du jeton d'authentification au nouveau microservice par le microservice de sécurité à jeton, et
- Réception, par le module d'enregistrement, d'une requête d'enregistrement d'un nouveau microservice, ladite requête d'enregistrement comportant des données d'accès aux ressources du nouveau microservice et le jeton d'authentification généré ;
- Vérification du jeton d'authentification généré auprès du microservice de sécurité à jeton, et
- Enregistrement, par le module d'enregistrement, lorsque le jeton d'authentification est validé, des données d'accès aux ressources du nouveau microservice sur le registre de service.

Un procédé selon la présente invention permet de coupler un nouveau microservice à une plateforme de gouvernance unifiée de façon sécurisée et transparente. Le nouveau microservice pourra, après son enregistrement, accepter des requêtes traitées par la plateforme de gouvernance unifiée. En particulier, le microservice mandataire pourra accéder auprès du module d'enregistrement à des données d'accès aux ressources (e.g. URL - « Uniform Resource Locator » en terminologie anglosaxonne) du nouveau microservice telles que des points terminaux (« Endpoint » en terminologie anglosaxonne).

Le procédé selon l'invention est avantageusement mis en oeuvre dans le cadre d'une gouvernance unifiée d'une pluralité de solutions de calcul intensif permettant d'exposer, selon un modèle unique, des modèles et domaines d'applications de calcul intensif ou haute performance très variés : Calcul Parallèle Haute Performance, Intelligence Artificielle, Apprentissage Profond et simulation de calcul quantique. Cette gouvernance unifiée permet une convergence générale de domaines divers cherchant à exploiter la puissance et la souplesse des grappes de calcul (clusters) ou des supercalculateurs ainsi que leur utilisation en nuage.

En particulier, le procédé selon l'invention permet un enregistrement de nouveaux microservices sans qu'il n'y ait le besoin d'arrêter et de redémarrer la plateforme.

Le procédé selon l'invention permet une authentification unique de tous les microservices. Pour cela, une partie de la vérification de sécurité de la gouvernance unifiée dans un environnement d'exécution est avantageusement effectuée par le microservice de sécurité à jeton du système d'enregistrement de microservice. Un tel procédé permet une authentification très flexible et générique (assurée par le microservice de sécurité) et de s'inscrire dans la bonne pratique de séparation des responsabilités, une des pierres fondatrices de la sécurité logicielle (SoC, « séparation of concerns » en terminologie anglosaxonne).

Ainsi, le procédé selon l'invention permet une gestion des enregistrements des microservices dans le cadre d'une solution proposant un point d'entrée unique vers les logiques métier (backends) différentes et cela avec une ergonomie et un référentiel de sécurité unifiés (e.g. boutons, menus, logiques de workflows, politique d'autorisation... normalisés).

**Selon d'autres caractéristiques du procédé d'enregistrement de microservices, ce dernier peut inclure facultativement une ou plusieurs des caractéristiques suivantes, seules ou en combinaison :**
- le procédé comporte en outre une étape de mise à jour en continu du registre de service et en particulier des données d'accès aux ressources du nouveau microservice (par exemple les URL des endpoints). Ainsi, le client utilisateur, le microservice mandataire ou le module d'enregistrement en fonction des architectures auront toujours accès à des données d'accès aux ressources à jours.
- la demande de rattachement comporte en outre un mot de passe du nouveau microservice et en ce que le microservice de sécurité à jeton vérifie également le mot de passe du nouveau microservice. Cela permet d'augmenter la sécurité de la solution.
- la demande de rattachement comporte en outre un identifiant d'un administrateur de la plateforme de gouvernance unifiée et un mot de passe pour ledit administrateur de la plateforme de gouvernance unifiée et en ce que le microservice de sécurité à jeton vérifie également l'identifiant de l'administrateur de la plateforme de gouvernance unifiée et son mot de passe. De même cela permet de renforcer la sécurité de la solution et de l'associer à une personne physique en charge du rattachement de ce nouveau microservice.
- Le procédé comporte en outre une étape de vérification du jeton d'authentification généré auprès du microservice de sécurité à jeton. Cela permet de renforcer la sécurité (séparation des responsabilité et délégation à un service spécialisé de sécurité) et la modularité de la solution.
- Le procédé comporte :
   - une étape de réception par le module d'enregistrement de la requête d'enregistrement envoyée par le nouveau microservice ;
   - une étape d'envoi par le module d'enregistrement du jeton d'authentification généré au microservice de sécurité à jeton ; puis
   - une étape de vérification du jeton d'authentification généré auprès du microservice de sécurité à jeton.

Le procédé peut aussi comporter une mise en place d'informations de routage des requêtes clients vers le module, le microservice ou la solution de calcul intensif servant une ressource ou un service demandé via le microservice mandataire.

Ainsi, le procédé délègue la vérification des jetons au microservice de sécurité à jeton. Cela permet de renforcer la sécurité et la modularité de la solution.
- la plateforme de gouvernance unifiée comporte un microservice mandataire et en ce que le procédé comporte :
   - une étape de réception par le microservice mandataire de la requête d'enregistrement envoyée par le nouveau microservice ;
   - une étape d'envoi par le microservice mandataire du jeton d'authentification généré au microservice de sécurité à jeton ;
   - une étape de transmission, par le microservice mandataire, de la requête d'enregistrement au module d'enregistrement lorsque le jeton d'authentification est validé.

L'implication du microservice mandataire permet de limiter les accès directs des nouveaux microservices au module d'enregistrement et renforce donc la sécurité et la modularité de la solution.
- le nouveau microservice est rendu accessible à un client utilisateur au niveau d'une interface agrégée et qu'il comporte une étape de transmission de données de contenu du nouveau microservice à l'interface agrégée.
- la plateforme de gouvernance unifiée comporte un microservice mandataire et en ce que le procédé comporte une étape de transmission des données d'accès aux ressources du nouveau microservice par le module d'enregistrement au microservice mandataire. L'implication du microservice mandataire permet de limiter les accès directs des nouveaux microservices aux clients utilisateurs et renforce donc la sécurité et la modularité de la solution tout en assurant son rôle premier de routeur / aiguilleur logiciel.
- le microservice mandataire est configuré pour, sur réception d'une demande de service d'un client utilisateur, transmettre au nouveau microservice, une requête sur des données d'accès reçues puis transmettre les ressources ou contenus obtenus au client utilisateur. En outre, le microservice mandataire peut vérifier, de préférence auprès du module d'enregistrement, l'état du nouveau microservice (e.g. existence, disponibilité) avant de transmettre la requête. Ainsi, un client utilisateur peut accéder, dans un environnement sécurisé, aux ressources ou contenus d'un nouveau microservice et cela sans avoir à réinitialiser toute la plateforme de gouvernance unifiée.

D'autres mises en oeuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

L'invention porte en outre sur un programme d'ordinateur comportant des instructions de code de programme qui lorsqu'elles sont exécutés par un ordinateur provoque la mise en oeuvre d'un procédé d'enregistrement de microservices conforme à l'invention.

L'invention porte en outre sur un support d'enregistrement sur lequel est enregistré un programme d'ordinateur pour la détermination d'une durée estimée avant incident technique dans une infrastructure informatique selon l'invention.

L'invention porte en outre sur un système d'enregistrement de microservices dans une plateforme de gouvernance unifiée d'une pluralité de solutions de calcul intensif, lesdites solutions de calcul intensif comportant au moins deux solutions sélectionnées parmi : un serveur de calcul haute performance, un serveur dédié à l'apprentissage supervisé ou non supervisé, et un serveur dédié aux calculs quantiques ;
ledit système d'enregistrement de nouveaux microservices comportant :
- Un référentiel de sécurité configuré pour mémoriser des informations d'identification de nouveaux microservices ;
- Un registre de service configuré pour mémoriser des données d'accès aux ressources de nouveaux microservices ;
- Un microservice de sécurité à jeton, configuré pour :
   o Recevoir une demande de rattachement d'un nouveau microservice, ladite demande de rattachement comportant un identifiant unique du nouveau microservice,
   o Vérifier l'identifiant unique du nouveau microservice à partir d'informations mémorisées dans le référentiel de sécurité,
   o Générer un jeton d'authentification et transmettre ledit jeton d'authentification au nouveau microservice ; et
- un module d'enregistrement, configuré pour :
   o Recevoir une requête d'enregistrement d'un nouveau microservice, ladite requête d'enregistrement comportant des données d'accès aux ressources du nouveau microservice et le jeton d'authentification généré et vérifier le jeton d'authentification généré auprès du microservice de sécurité à jeton; et
   o Enregistrer, lorsque le jeton d'authentification est validé, des données d'accès aux ressources du nouveau microservice sur le registre de service.

Un tel système informatique permet d'intégrer de façon sécurisée et transparente un nouveau microservice à une plateforme de gouvernance unifié. Le nouveau microservice pourra, après son enregistrement, accepter des requêtes traitées par la plateforme de gouvernance unifiée. En particulier, le microservice mandataire pourra accéder auprès du module d'enregistrement à des données d'accès aux ressources du nouveau microservice telles que des points terminaux (« Endpoint » en terminologie anglosaxonne).

**Selon d'autres caractéristiques optionnelles du système informatique, ce dernier peut inclure facultativement une ou plusieurs des caractéristiques suivantes, seules ou en combinaison** :
- le microservice de sécurité à jeton est configuré pour accéder à une pluralité d'annuaires, de préférence à au moins des annuaires de type LDAP, Active Directory et Kerberos. La pluralité de possibilité offerte est permise par la structure du système et permet de conférer une forte adaptabilité à l'invention.
- Le microservice de sécurité à jeton peut être configuré pour vérifier la validité du jeton d'authentification généré.

D'autres avantages et caractéristiques de l'invention apparaitront à la lecture de la description suivante donnée à titre d'exemple illustratif et non limitatif, en référence aux Figures annexées :
La Figure 1 représente un schéma d'un système informatique d'enregistrement de microservices selon l'invention.
La Figure 2 représente une illustration schématique d'un procédé d'enregistrement de microservices selon l'invention. Les étapes en pointillées sont facultatives.
LaFigure 3 représente un schéma d'une procédure de gestion d'autorisation selon un mode de réalisation de l'invention.
La Figure 4 représente un schéma d'une procédure de gestion de commande d'action selon un mode de réalisation de l'invention.
La Figure 5A représente un schéma d'un mode de fonctionnement d'un système informatique d'enregistrement de microservices selon un mode de réalisation de l'invention.
La Figure 5B représente un schéma d'un mode de fonctionnement d'un système informatique d'enregistrement de microservices selon un autre mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuent des combinaisons de matériel spécial et d'instructions informatiques.

### [Description de l'invention]

Dans la suite de la description, l'expression « **gestion d'autorisations** » correspond au sens de l'invention à la capacité de gérer, en fonction de règles prédéterminées, l'accès aux solutions de calcul intensif d'une part et les droits d'utilisateurs sur ces solutions tels que lecture, écriture, copie, exécution, modification, et contrôle total. En général, l'autorisation englobe les politiques de permissions, la gestion des accès, des identités et l'authentification.

L'expression « **solution de calcul intensif** » correspond de préférence à des infrastructures informatiques capable d'exécuter des calculs intensifs ou hautes performances tels que : Calcul Parallèle Haute Performance, Intelligence Artificielle, Apprentissage Profond, calcul quantique et simulation de calcul quantique. Le calcul quantique fait référence largement à toute solution de calcul utilisant des effets quantiques afin de trouver des solutions aux problèmes de calcul.

Le terme « **microservice** » correspond à une chaine applicative comportant généralement une pluralité d'applications capables d'exécuter une ou plusieurs taches. Les microservices peuvent être reliés entre eux par l'intermédiaire d'API tel qu'une API REST. La présence dans le cadre de l'invention de microservices permet de conférer une forte modularité et évolutivité à la solution notamment au regard de l'implication de solutions de calcul intensif potentiellement très différentes.

Le terme « **portlet** » peut désigner des composants logiciels d'interface utilisateur connectables qui sont gérés et affichés dans un portail web. Une page de portail peut être affichée comme une collection de fenêtres de portlet ne se chevauchent pas, où chaque fenêtre de portlet affiche un portlet. Par conséquent, un portlet (ou d'une collection de portlets) ressemble à une application basée sur le Web qui est hébergé dans un portail.

L'expression « **Portail web** » ou plus simplement « **Portail** » peut désigner un outil d'accès pour accéder à différents types d'informations et d'applications via un système client à partir des ressources du réseau. Un outil pour afficher une page de portail peut être un navigateur Web. Cependant, un portail peut également être intégré dans d'autres applications. Les portails au sens de l'invention sont avantageusement capables de présenter des données de plusieurs sources telles que des applications Web dans une seule interface agrégée Web ou d'un navigateur. En outre, un portail offre la possibilité d'afficher des portlets dans l'interface agrégée. La configuration du portail peut inclure une définition de portail avec par exemple un fichier incluant le langage de balisage extensible (XML), les fichiers de définition de portlet pour tous les portlets associés avec le portail, les pages de serveur Java (JSP), les descripteurs d'applications Web, des images telles que les fichiers de format d'échange graphique ( GIFs), les descripteurs de déploiement, les fichiers de configuration, les fichiers d'archive Java (JAR) qui contiennent des instructions logiques et de mise en forme pour l'application de portail, et tous les autres fichiers nécessaires pour une application de portail souhaitée.

Le terme « **requête** » peut désigner une demande d'information, généralement identifiée par un « lien » sur une page portail. Une demande peut être initiée par un « clic » sur un symbole affiché associé au « lien ».

L'expression « **interface agrégée** » ou « **interface d'agrégation** » peut désigner au sens de l'invention une interface homme-machine graphique bénéficiant d'un procédé de collecte et d'agrégation d'informations sur les ressources du réseau, ainsi que de l'organisation des objets d'information selon l'une des caractéristiques d'un écran d'affichage.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

On entend par « **traiter** », « **calculer** », « **exécuter** », « **déterminer** », « **afficher », « extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **module** » au sens de l'invention, un dispositif, un élément physique ou virtuel pouvant faire partie d'un système et pouvant posséder ses propres mécanismes interne (pilotes et périphériques etc...), capacités et fonctionnalités. Un module au sens de l'invention peut correspondre à une extension, une carte, un code, un pilote, un programme, un logiciel, un disque, un fichier, une extension, un équipement informatique, un composant ou périphérique, etc...

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **nouveau microservice** », au sens de l'invention, peut correspondre à un ensemble fonctionnel, de préférence autonome, pouvant coupler logiciel et matériel, et exposant des ressources au travers d'une interface de communication telle qu'une API REST que d'autres ensembles fonctionnels pourront consommer. En particulier, un nouveau microservice correspond à un ensemble fonctionnel n'ayant pas encore été enregistré au niveau du module d'enregistrement de la plateforme de gouvernance ou encore un ensemble fonctionnel ayant été mis à jour de sorte que les données d'accès préalablement enregistrées nécessitent une mise à jour.

Les expressions « **ressources d'un microservice** » ou « contenu d'un microservice », au sens de l'invention, peuvent correspondre à des données générées ou transmises par le microservice ou encore à des fonctions mise en oeuvre par le microservice. En particulier, cela pourra correspondre dans le cadre d'une gouvernance unifiée d'une pluralité de solutions de calculs intensifs, à des informations échangées avec le(s) ordonnanceur(s), des données métier générées et partagées par des solutions de calcul différentes telles que des données d'exécution des solutions de calculs intensifs 70. Les données d'exécution des solutions de calculs intensifs 70 peuvent par exemple correspondre à :
- Des résultats de calculs accessibles et traitables par plusieurs microservices de calcul :
   Cela permet au client utilisateur 2 de disposer des résultats de calculs traités par les solutions de calculs intensifs.
- Des mesures de consommation énergétique des solutions de calculs intensifs :
   Cela permet au client utilisateur 2 de disposer d'une donnée résumant la consommation énergétique prévue, ou réelle des calculs intensifs planifiés sur une solution de calculs intensifs.
- Des mesures d'utilisation de ressources (bande passante réseau, entrées-sorties stockage, mémoire, CPU, GPU...) :
   Ainsi, au lieu de disposer de données d'utilisation des ressources en fonction des différentes solutions de calculs intensifs.
- Des données d'indice d'utilisation des processus de calculs intensifs :
   Au-delà de la mesure d'utilisation de ressources, il est avantageux de pouvoir recevoir une valeur d'indice d'utilisation des processus de calculs intensifs pour chacune des solutions de calculs intensifs utilisées. Par exemple, cette valeur d'indice peut être calculée à partir des durées d'utilisation ainsi que des capacités utilisées. Cette valeur d'indice d'utilisation des processus de calculs intensifs peut par exemple être ensuite utilisée pour calculer un cout d'utilisation de chacun des processus de calculs intensifs.
- Des données de durée avant complétude des calculs :
   Par exemple une valeur de durée reflétant la fin des opérations pour chacune des solutions de calculs intensifs.

De façon préférée, la donnée d'exécution des solutions de calculs intensifs 70 est sélectionnée parmi :
- Des résultats de calculs accessibles et traitables par plusieurs microservices de calcul ;
- Des mesures de consommation énergétique des solutions de calculs intensifs ;
- Des mesures d'utilisation de ressources ;
- Des données d'indice d'utilisation des processus de calculs intensifs ; et
- Des données de durée avant complétude des calculs.

De façon plus préférée, la donnée d'exécution des solutions de calculs intensifs 70 est sélectionnée parmi :
- Des résultats de calculs accessibles et traitables par plusieurs microservices de calcul ;
- Des mesures de consommation énergétique ; et
- Des mesures d'utilisation de ressources.

Ainsi, comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en oeuvre l'invention.

Dans la suite de la description, les mêmes références sont utilisées pour désigner les mêmes éléments.

Comme cela a été mentionné, il existe de nombreuses solutions de calcul intensif disponibles et accessibles aux utilisateurs ponctuels. Néanmoins, il n'existe pas de plateforme permettant d'unifier l'accès à une pluralité de solution de calcul intensif de façon homogène, transparente et sécurisée. Ainsi, les inventeurs ont proposé une solution informatique permettant, via l'utilisation d'une pluralité de microservices, une gouvernance unifiée et une interface agrégée pour l'accès à une variété de services de fournisseurs tiers de solutions de calcul intensif.

Néanmoins, dans le cadre d'une plateforme de gouvernance unifiée, il est nécessaire de pouvoir intégrer une pluralité de nouveaux microservices, de façon aisée et sécurisée. Pour cela, les inventeurs ont proposé une solution mettant en oeuvre notamment un microservice de sécurité à jetons, et un module d'enregistrement. Le microservice de sécurité à jetons est en charge de la gestion des fonctionnalités de sécurité et d'authentification pour sécuriser le système telles que l'authentification des utilisateurs et/ou des développeurs, la fourniture de différents niveaux d'accès au système basée sur les informations d'identification de sécurité des utilisateurs et/ou des développeurs. Le module d'enregistrement est quant à lui en charge de l'enregistrement de nouveaux microservices, du suivi de leur état, de la mémorisation des données d'accès aux ressources proposées par ces microservices et de l'interaction avec un microservice mandataire pouvant accéder à ces microservices.

Dans ce contexte, l'invention porte en particulier sur un **procédé d'enregistrement de microservices dans une plateforme de gouvernance unifiée d'une pluralité de solutions de calcul intensif.**

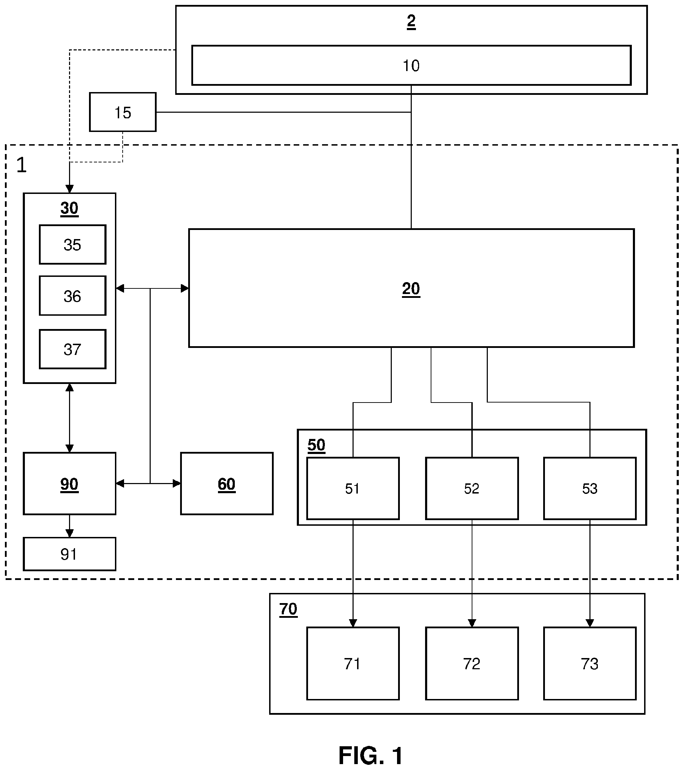

En particulier, comme cela est illustré à la **figure 1** et comme cela sera décrit par la suite, le procédé d'enregistrement de microservices et de façon plus générale la gouvernance unifiée peuvent être assurés par une plateforme de gouvernance comportant un microservice mandataire 20, un microservice de sécurité à jeton 30, au moins un référentiel de sécurité 35, un module d'enregistrement 90, et un registre de service 91.

L'enregistrement de microservices permettra grâce au procédé selon l'invention de gérer une pluralité de microservices différents en toute sécurité et cela sans interruption de service pour une multitude d'utilisateurs de la plateforme de gouvernance unifiée. En effet, un procédé d'enregistrement de microservices selon l'invention est avantageusement mis en oeuvre dans le cadre d'une gouvernance unifiée d'une pluralité de solutions de calculs intensifs 70. Les solutions de calculs intensifs 70 dans le cadre de la présente invention sont par exemple sélectionnées parmi : un serveur de calcul haute performance 71, un serveur dédié à l'apprentissage supervisé ou non supervisé 72, et un serveur dédié aux calculs quantiques 73, en particulier aux simulations de calcul quantique. En particulier, un serveur dédié à l'apprentissage supervisé ou non supervisé 72 peut être serveur dédié à l'apprentissage profond supervisé ou non supervisé. De façon préférée, les solutions de calculs intensifs pour lesquelles l'enregistrement ou la gestion d'autorisations est mise en oeuvre comportent au moins deux des solutions listées ci-dessus, de façon plus préférée au moins trois des solutions listées ci-dessus.

Les solutions de calculs intensifs 70 sont avantageusement couplées à des microservices de calcul 50. Les microservices de calcul 50 dans le cadre de la présente invention sont par exemple sélectionnées parmi : un microservice 51 relié à un serveur de calcul haute performance 71, un microservice 52 relié à un serveur dédié à l'apprentissage supervisé ou non supervisé 72, et « n » microservice 53 relié à un serveur dédié aux calculs quantiques 73, en particulier aux simulations de calcul quantique.

Ainsi, le procédé d'enregistrement de microservices est mis en oeuvre au moins en partie par une plateforme de gouvernance, c'est-à-dire que le procédé peut par exemple être mis en oeuvre par un dispositif informatique tel qu'un serveur informatique pour la gouvernance unifiée d'une pluralité de solutions de calcul intensif 70 en combinaison avec au moins un client utilisateur 2, de préférence plusieurs clients utilisateur 2 et des solutions de calcul intensif 70. En outre, chacun des clients utilisateur 2 peut comporter une interface agrégée 10 avantageusement composée d'une pluralité de portlet, chaque portlet étant associé à une solution de calcul intensif 70 telle qu'un serveur de calcul haute performance 71, un serveur dédié à l'apprentissage supervisé ou non supervisé 72, un serveur dédié aux calculs quantiques 73.

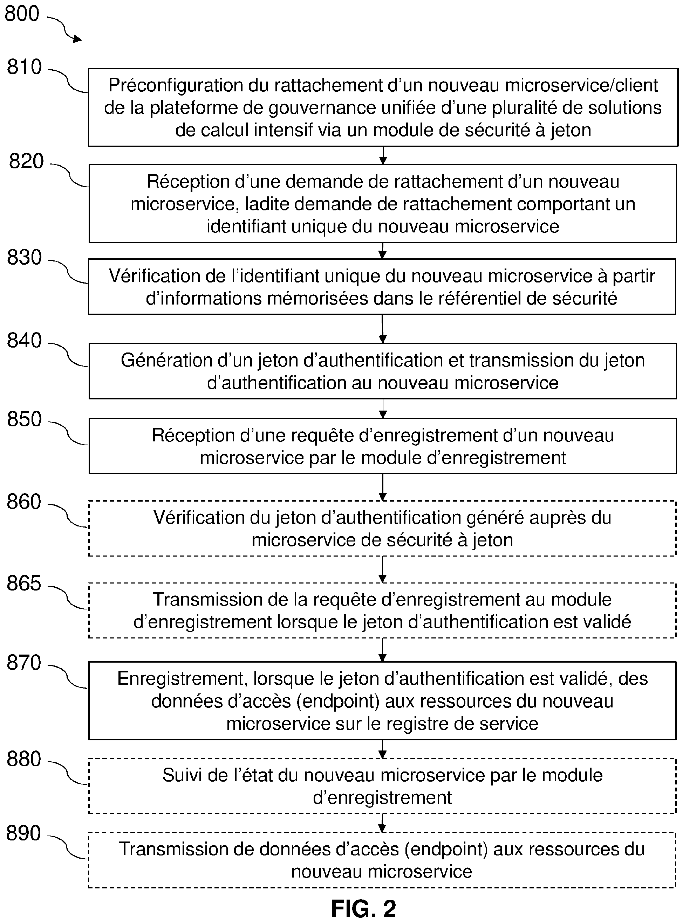

Comme cela est illustré à la **figure 2****, un procédé 800 d'enregistrement de microservices selon l'invention** comporte les étapes de : réception 820 d'une demande de rattachement d'un nouveau microservice 60 ; vérification 830 d'un identifiant unique du nouveau microservice IDMS ; génération 840 d'un jeton d'authentification et transmission du jeton d'authentification au nouveau microservice par le microservice de sécurité à jeton 30 ; réception 850 d'une requête d'enregistrement d'un nouveau microservice ; et enregistrement 870 des données d'accès aux ressources du nouveau microservice.

Le procédé 800 d'enregistrement de microservices selon l'invention peut également avantageusement intégrer des étapes de soumission de travaux, surveillance des travaux, suspension et reprise des travaux et modification des paramètres du travail.

De plus, comme cela sera détaillé par la suite, le procédé selon l'invention peut avantageusement intégrer une procédure 100 de gestion d'autorisation et une procédure 300 de gestion de commande d'action.

Un procédé 800 d'enregistrement de microservices selon l'invention peut comporter **une étape de préconfiguration 810 du rattachement d'un nouveau microservice auprès de la plateforme de gouvernance unifiée.** Cela correspond à une déclaration d'un nouveau microservice auprès de la plateforme de gouvernance unifiée. Cette déclaration peut être en particulier réalisée auprès du microservice de sécurité à jeton 30 et notamment d'un de ses référentiels de sécurité 35.

Lors de cette étape, un utilisateur et en particulier un administrateur pourra s'authentifier auprès de la plateforme de gouvernance puis modifier les registres adéquates, tel que le référentiel de sécurité 35 de façon à déclarer l'existence possible (optionnellement rattachable à la solution) d'un nouveau microservice. Par exemple, le nouveau microservice pourra être enregistré auprès du module d'enregistrement par un administrateur afin d'être connu et autorisé à se connecter aux autres services (module mandataire, microservice de sécurité à jetons, interface agrégée, etc.).

Un procédé 800 d'enregistrement de microservices selon l'invention comporte **une étape de réception 820 d'une demande de rattachement d'un nouveau microservice** 60. La demande de rattachement peut être émise par un dispositif informatique tiers ou par un client authentifié tel qu'un client utilisé par un administrateur de la plateforme de gouvernance. De façon préférée, la demande de rattachement est émise par un dispositif informatique supportant le nouveau microservice.

Cette demande de rattachement est réceptionnée de préférence par le microservice de sécurité à jeton 30. Elle peut être transmise directement du nouveau microservice ou d'un dispositif informatique supportant le nouveau microservice au microservice de sécurité à jeton 30. Néanmoins, elle peut alternativement transiter entre le nouveau microservice et le microservice de sécurité à jeton 30 via le microservice mandataire 20.

Cette demande de rattachement comporte un identifiant unique du nouveau microservice IDMS. La demande de rattachement peut comporter avantageusement un mot de passe du nouveau microservice. Dans ce cas, le microservice de sécurité à jeton peut être configuré pour vérifier également le mot de passe du nouveau microservice.

De façon préféré, la demande de rattachement comporte en outre un identifiant d'un administrateur de la plateforme de gouvernance unifiée et un mot de passe pour ledit administrateur de la plateforme de gouvernance unifiée. Dans ce cas, le microservice de sécurité à jeton peut être configuré pour vérifier également l'identifiant de l'administrateur de la plateforme de gouvernance unifiée et son mot de passe.

Un procédé 800 d'enregistrement de microservices selon l'invention comporte **une étape de vérification 830 de l'identifiant unique du nouveau microservice IDMS.** Cette étape est de préférence réalisée par le microservice de sécurité à jeton 30. En outre, cette vérification peut être faite à partir d'informations mémorisées dans le référentiel de sécurité 35.

Cette étape de vérification 830 peut également comporter le cas échéant la vérification du ou des mots de passe, de l'identifiant d'un administrateur de la plateforme de gouvernance unifiée ou encore d'un jeton d'authentification associé à un administrateur de la plateforme de gouvernance unifiée.

Un procédé 800 d'enregistrement de microservices selon l'invention comporte **une étape de génération 840 d'un jeton d'authentification et de transmission du jeton d'authentification au nouveau microservice.** Cette étape est de préférence réalisée par le microservice de sécurité à jeton 30.

Le jeton d'authentification généré et transmis au nouveau microservice permettra au nouveau microservice, dans le cadre de la présente invention, de s'exécuter et proposer ses fonctions au travers de la plateforme.

Un procédé 800 d'enregistrement de microservices selon l'invention comporte **une étape de réception 850 d'une requête d'enregistrement REQE d'un nouveau microservice.**

La requête d'enregistrement REQE peut être émise par un dispositif informatique tiers ou par un client 2 authentifié tel qu'un client utilisé par un administrateur de la plateforme de gouvernance. De façon préférée, la requête d'enregistrement REQE est émise par un dispositif informatique sur lequel s'exécute le nouveau microservice.

Cette requête d'enregistrement REQE est réceptionnée de préférence par le module d'enregistrement 90. Elle peut être transmise directement du nouveau microservice ou d'un dispositif informatique sur lequel s'exécute le nouveau microservice au module d'enregistrement 90. Néanmoins, alternativement, elle peut transiter entre le nouveau microservice et le module d'enregistrement 90 *via* le microservice mandataire 20.

Cette requête d'enregistrement REQE comporte des données d'accès (Endpoint) aux ressources du nouveau microservice. Ces données d'accès aux ressources du nouveau microservice peuvent par exemple prendre la forme d'un à plusieurs « endpoints ». La requête d'enregistrement REQE comporte également de façon préférée le jeton d'authentification généré.

Comme cela est illustré à la figure 2, un procédé 800 d'enregistrement de microservices selon l'invention peut avantageusement comporter **une étape de vérification 860 du jeton d'authentification généré auprès du microservice de sécurité à jeton 30.** Cette étape est de préférence réalisée par le microservice de sécurité à jeton 30. En outre, cette vérification peut être faite à partir d'informations mémorisées dans le référentiel de sécurité 35.

Cette étape de vérification 860 du jeton d'authentification peut également comporter le cas échéant la vérification d'un ou de plusieurs mots de passe et/ou d'identifiant. Néanmoins, l'utilisation d'un jeton d'authentification permet avantageusement de se passer de la vérification des mots de passe et identifiants.

En outre, un procédé 800 d'enregistrement de microservices selon l'invention peut alors comporter, lorsque le jeton d'authentification est validé, **une étape de transmission 865 de la requête d'enregistrement REQE au module d'enregistrement 90** par le microservice mandataire 20. En effet, la requête d'enregistrement peut être transmise par le nouveau microservice au microservice mandataire puis c'est le microservice mandataire 20 qui se charge de réaliser l'étape de vérification 860 du jeton d'authentification auprès du microservice de sécurité à jeton 30.

Dans ce cas, cette requête d'enregistrement reçue par le microservice mandataire 20 et validée par le microservice de sécurité à jeton est ensuite transmise au module d'enregistrement 90. Un procédé 800 d'enregistrement de microservices selon l'invention peut comporter, lorsque le jeton d'authentification est validé, une étape de validation de la requête d'enregistrement par le module d'enregistrement 90.

Un procédé 800 d'enregistrement de microservices selon l'invention comporte **une étape d'enregistrement 870 des données d'accès aux ressources du nouveau microservice.** Cette étape est de préférence réalisée par le module d'enregistrement 90. En outre, cet enregistrement peut être fait sur le registre de service 91 ou sur tout support de mémoire de données.

Cette étape d'enregistrement 870 est particulièrement mise en oeuvre lorsque le jeton d'authentification est validé de préférence par le microservice de sécurité à jetons.

Un procédé 800 d'enregistrement de microservices selon l'invention peut comporter **une étape de suivi de l'état 880 du nouveau microservice.** Cette étape est de préférence réalisée par le module d'enregistrement 90.

Ainsi, le module d'enregistrement peut être configuré pour réaliser également un management des microservices de façon à déterminer s'ils sont en panne, en fonction, déconnecté, en erreur. De façon préférée, un procédé selon l'invention peut comporter en outre une étape de mise à jour en continu du registre de service 91 et en particulier des données d'accès aux ressources.

Cette étape de suivi 880 comporte en particulier : une surveillance de l'état d'un microservice (absent / désactivé / arrêté / démarré) ; un changement de l'état d'un microservice (absent / désactivé / arrêté / démarré) ; une mémorisation de la localisation d'un microservice ; et/ou une mémorisation des services (endpoints) proposés par un microservice.

Une fois un nouveau microservice enregistré au sein de la plateforme de gouvernance unifiée, celui-ci pourra faire l'objet d'accès ou de requête de contenu, par exemple par le microservice mandataire. En effet, le nouveau microservice est de préférence configuré pour fournir sur requête des contenus à d'autres modules ou microservices.

Ainsi, un procédé 800 selon l'invention peut comporter **une étape de transmission 890 de données d'accès aux ressources du nouveau microservice** par le module d'enregistrement 90 au microservice mandataire 20.

Un nouveau microservice en fonctionnement pourra alors être contacté par des portlets d'une interface agrégée qui le référence.

De façon préférée, le nouveau microservice est rendu accessible à un client utilisateur 2 au niveau d'une interface agrégée et un procédé selon l'invention comporte une étape de transmission de données de contenu du nouveau microservice à l'interface agrégée.

En particulier, comme cela sera détaillé par la suite, un client utilisateur 2 pourra réaliser une demande de service auprès du microservice mandataire qui, après vérification des permissions dudit client utilisateur 2, pourra acquérir auprès du module d'enregistrement 90 des données d'accès aux ressources du nouveau microservice tels que des endpoints répondant à la demande de service.

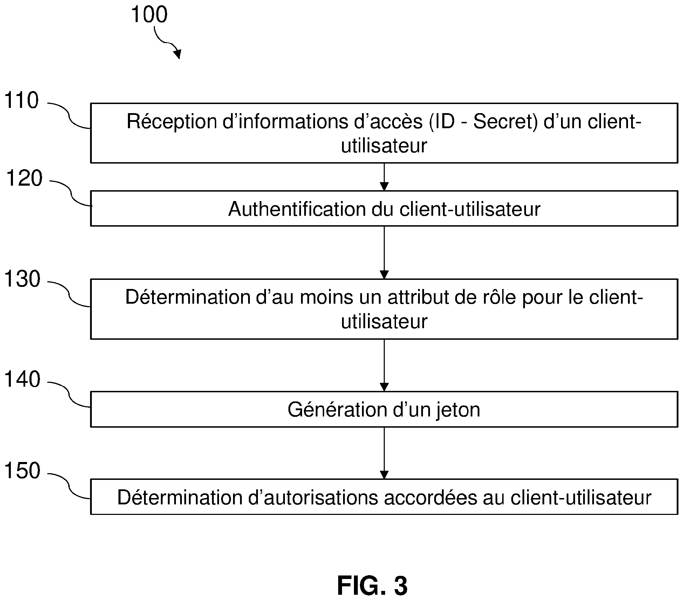

Comme cela est illustré à la figure 3, un procédé selon l'invention peut également comporter une **procédure 100 de gestion d'autorisations accordées à un client utilisateur 2 ou un client tiers 15.** Dans le cadre de cette procédure 100 de gestion d'autorisations, le système informatique 1 peut comporter en outre un référentiel d'autorisations.

Une telle procédure 100 de gestion d'autorisations selon l'invention comporte les étapes de réception 110 d'informations d'accès d'un client utilisateur 2 ou d'un client tiers 15, d'authentification 120 du client utilisateur 2 ou du client tiers 15, de détermination 130 d'au moins un attribut de rôle pour le client utilisateur 2 ou le client tiers 15, de génération 140 d'un jeton, et de détermination 150 d'autorisations accordées au client utilisateur 2 ou au client tiers 15.

En outre, une procédure 100 de gestion d'autorisations selon l'invention peut comporter des étapes de soumission de travaux, surveillance de travaux, suspension et reprise de travaux et modification des paramètres du travail.

Avantageusement, une procédure 100 de gestion d'autorisations selon l'invention peut comporter une étape de modification de l'interface agrégée en fonction d'autorisations accordées au client utilisateur ou au client tiers 15. En effet, une fois identifié, le client utilisateur pourra bénéficier de nouvelles fonctionnalités et donc d'une interface agrégée cohérente avec ces fonctionnalités.

Ainsi, la procédure 100 de gestion d'autorisations selon la présente invention comporte une **réception 110 d'informations d'accès d'un client utilisateur 2 ou d'un client tiers 15.**

De façon préférée, au moins une partie des informations d'accès sont générées au niveau de l'interface agrégée 10 du client utilisateur 2 ou du client tiers 15.

En particulier, la réception peut être faite par le microservice de sécurité à jeton 30. Néanmoins, de façon préférée, ces informations sont transférées du client utilisateur ou du client tiers 15 directement ou indirectement au microservice mandataire 20, puis le microservice mandataire 20 transfère alors ces informations d'accès modifiées, ou non, au microservice de sécurité à jeton 30.

Les informations d'accès peuvent par exemple prendre la forme d'un message comportant des données d'identification du client utilisateur 2 ou du client tiers 15.

Ainsi, la procédure 100 de gestion d'autorisations selon la présente invention comporte **une étape d'authentification 120 du client utilisateur 2** ou du client tiers 15.

L'authentification peut par exemple être réalisée par tout module capable de mettre en oeuvre un protocole d'authentification unique (SSO pour « Single Sign On » en terminologie anglosaxonne). Différents protocoles peuvent être utilisés pour réaliser l'authentification du client utilisateur 2 ou du client tiers 15. De façon préférée, l'authentification 120 du client utilisateur 2 se fait selon un protocole sélectionné parmi OAuth protocole connu permettant à une application tierce d'accéder à un service web, et SAML pour « Security assertion markup language » selon une terminologie anglo-saxonne, concernant un standard informatique définissant un protocole pour échanger des informations liées à la sécurité et permettant l'authentification unique d'un utilisateur.

Avantageusement, l'authentification 120 du client utilisateur 2 ou du client tiers 15 n'est pas réalisée par le microservice mandataire 20. De façon plus préférée, l'authentification est réalisée par un microservice de sécurité à jeton 30. Il y a ainsi une délégation, par le microservice mandataire 20, du contrôle d'identification, d'authentification et d'attribution de rôle au microservice de sécurité à jeton 30.

En particulier, le microservice de sécurité à jetons 30 est configuré pour accéder à une pluralité d'annuaire ou référentiels de sécurité 35, 36, 37, de préférence à au moins des annuaires de type LDAP, pour « Lightweight Directory Access Protocol » selon une terminologie anglo-saxonne, un service de stockage et de gestion d'un système d'information tel que la solution connue Active Directory^{®} et un système d'authentification tel que le protocole d'authentification connu Kerberos^{®}. Le référentiel de sécurité 35,36,37 peut correspondre à un support de stockage de clés et/ou de jetons, telle qu'une base de données, un fichier de données ou tout autre système de stockage sécurisé dans une mémoire. C'est généralement un support sécurisé permettant de stocker les noms, mots de passe, rôles et autorisations des utilisateurs. De préférence, il comporte une matrice de rôle et une matrice de souscription.

En outre, le microservice de sécurité à jetons 30 met avantageusement en oeuvre un protocole de type OAuth et en particulier de type OAuth 2.0.

De façon préférée, bien que le microservice de sécurité à jeton 30 fasse partie d'un système informatique 1 d'enregistrement selon l'invention, il est avantageusement hébergé sur un ou plusieurs dispositifs informatiques (e.g. serveurs) différents, distincts du ou des dispositifs informatiques hébergeant le microservice mandataire 20 et/ou les microservices de calcul 50, 51, 52, 53.

Il existe de nombreuses variantes possibles dans la mise en oeuvre de l'authentification 120 du client utilisateur 2 ou du client tiers 15. Avantageusement, le microservice de sécurité à jeton 30 peut fournir une très grande variété de protocole d'authentification mais n'est pas en mesure de fournir des contrôles de sécurité à grains fins optimisés. Pour remédier à cette situation, les inventeurs ont proposés une délégation uniquement d'un sous ensemble de contrôle au microservice de sécurité à jeton 30. Si le microservice de sécurité à jeton 30 ne peut pas fournir des contrôles de sécurité suffisamment fins pour des solutions de calculs intensifs, ces contrôles seront confiés aux microservices de calcul.

En outre, le microservice mandataire peut enregistrer des informations fournies par le client utilisateur sur une bibliothèque de journalisation et stocker ces informations dans une base de données.

L'authentification 120 du client utilisateur 2 ou du client tiers 15 peut aussi correspondre à une authentification d'un client développeur. Avantageusement, le microservice de sécurité à jeton 30 sera invoqué à chaque fois qu'un tiers contactera le microservice mandataire et nécessitera une authentification.

Ainsi, la procédure 100 de gestion d'autorisations selon la présente invention comporte une étape de **détermination 130 d'au moins un attribut de rôle pour le client.**

De façon préférée, la détermination 130 est réalisée par le microservice de sécurité à jeton 30. La détermination 130 d'au moins un attribut de rôle pour le client est par exemple réalisée à partir des informations de commande d'accès et de données mémorisées dans un référentiel de sécurité 35,36,37.

Une fois le client utilisateur authentifié, le procédé selon l'invention va permettre la génération d'un jeton permettant un accès temporaire à des ressources gérées par les microservices de calcul. En particulier, le procédé selon l'invention repose sur des autorisations contrôlées via des rôles ou attributs de rôle préalablement déterminés.

Sur la base de règles prédéterminée, un rôle est sélectionné pour un client et inscrit dans un jeton d'identification du client.

Le jeton peut par exemple prendre la forme d'un jeton JWT (« JSON Web Token » en terminologie anglosaxonne). Il contient les demandes sur l'identité du client authentifié. Alternativement, le procédé selon l'invention peut mettre en oeuvre un jeton de type PASETO (« Platform-Agnostic Security Tokens » en terminologie anglosaxonne), un jeton de type Branca ou encore un jeton de type Macaroons (Cookies avec mises en garde contextuelles pour l'autorisation décentralisée dans le cloud selon Google^{®}).

De façon préférée, l'authentification 120 et la détermination 130 d'au moins un attribut de rôle pour le client utilisateur 2 ou le client tiers 15 est réalisée conformément au protocole OAuth 2.0.

En particulier, le microservice de sécurité à jeton 30 traite un message du microservice mandataire 20 et extrait la demande d'accès. Le microservice de sécurité à jeton 30 compile ensuite la liste des droits d'accès accordés pour le client et demande un jeton de sécurité pour les droits accordés.

Un jeton est alors généré et transmis au microservice mandataire 20 qui le transmet à son tour au client utilisateur.

Ainsi, la procédure 100 de gestion d'autorisations selon la présente invention comporte une étape de **génération 140 d'un jeton.** En particulier, ce jeton généré permet un accès à toutes les solutions de calcul intensif accessibles (i.e. pour lesquelles le client utilisateur dispose des autorisations) audit client en fonction de l'au moins un attribut de rôle déterminé.

Néanmoins, ce jeton ne permet pas généralement de définir finement les autorisations accordées au client pour une ou plusieurs solutions de calcul intensif. De façon plus préférée, le jeton généré comporte des droits d'accès à une ou plusieurs solutions de calcul intensif ainsi qu'une caractéristique de rôle du client.

Ainsi, la procédure 100 de gestion d'autorisations selon la présente invention comporte alors une étape de **détermination 150 d'autorisations accordées au client utilisateur 2 ou au client tiers 15.**

Avantageusement, la détermination d'autorisations est basée sur l'au moins un attribut de rôle déterminé et des données contenues dans un référentiel d'autorisations.

La détermination 150 d'autorisations peut par exemple être réalisée par le microservice mandataire ou un microservice de calcul.

De façon préférée, la détermination 150 d'autorisations est réalisée par au moins un microservice de calcul 50, 51, 52, 53.

A titre d'exemple, une solution de calcul intensif peut présenter plus de 50 fonctionnalités qui doivent être multipliées par une distribution en fonction des rôles de l'utilisateur et des solutions. Ainsi, c'est généralement plusieurs centaines d'autorisations qui doivent être gérées. Dans le cadre de l'invention, un microservice de calcul est donc avantageusement couplé à un catalogue d'autorisations ou référentiel d'autorisations.

Ce catalogue ou référentiel d'autorisations peut être implémenté comme une table dans la base de données du backend (soit dans son propre microservice, soit dans un microservice dédié). Ainsi, au moins une partie du contrôle d'accès et de gestion d'autorisations est mise en oeuvre au niveau de chacun des microservices de calcul.

Grâce à cela il sera possible de répondre aux besoins d'autorisations très fines des solutions de calcul intensif tout en assurant un haut niveau de sécurité fourni par l'utilisation de jetons d'authentification.

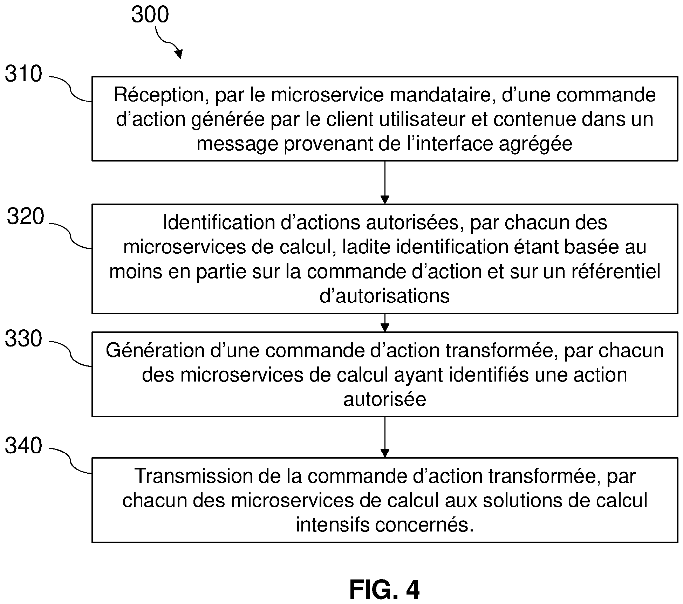

Comme cela est illustré à la **figure 4****,** un procédé selon l'invention peut comporter une **procédure 300 de gestion de commande d'action** peut comporter une réception 310, par le microservice mandataire 20, d'une commande d'action générée par le client utilisateur 2. Cette commande d'action peut par exemple être contenue dans un message provenant de l'interface agrégée 10.

La procédure 300 peut comporter également une identification 320 d'actions autorisées par chacun des microservices tels que des microservices de calcul 50,51,52,53. Cette identification est de préférence basée au moins en partie sur la commande d'action et sur un référentiel d'autorisations qui sera décrit par la suite. Ainsi, à partir d'un message émis par une interface agrégée 10 et comportant une commande d'action, les microservices de calcul peuvent, grâce au référentiel d'autorisations, déterminer si cette commande d'action se réfère à une ou plusieurs actions autorisées pour un client utilisateur 2 donné.

La procédure 300 comporte également une génération 330 d'une commande d'action transformée, par chacun des microservices ayant identifié une action autorisée. En effet, alors que la commande d'action générée par l'interface agrégée a pris une forme pouvant être adressée par tous les microservices grâce par exemple à un référentiel commun de mots-clés, les microservices peuvent dans un second temps générée une commande d'action transformée qui pourra être adressée par exemple aux solutions de calcul intensif. Etant données que ces solutions sont indépendantes, les commandes d'action transformées seront généralement différentes en fonction des microservices.

La procédure 300 peut comporter également une transmission 340 de la commande d'action transformée, par chacun des microservices aux solutions de calcul intensifs 70 concernés ou à l'interface agrégée.

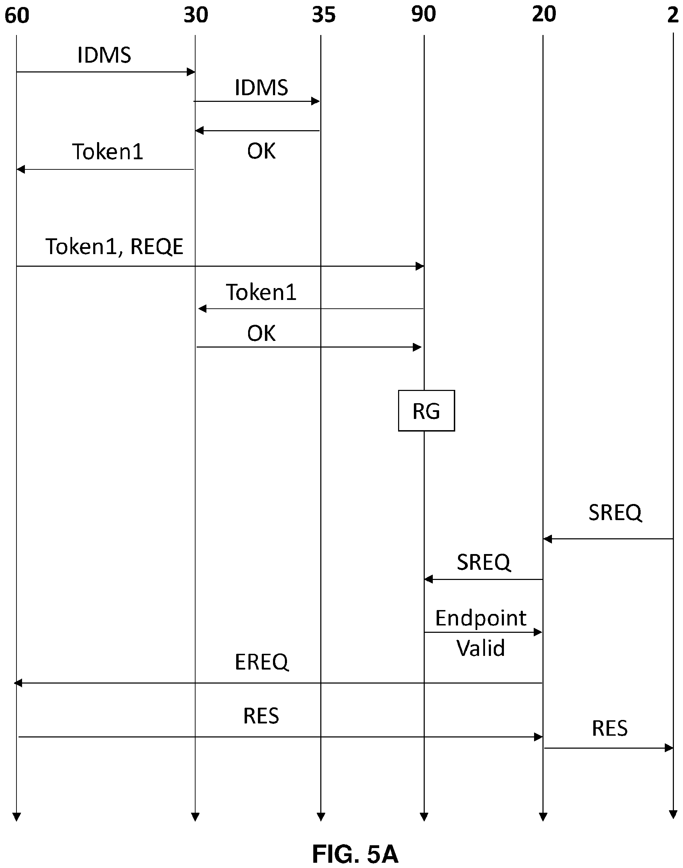

Un exemple de mise en oeuvre d'un système informatique d'enregistrement de microservices selon l'invention est illustré à la **figure 5A****.**

Dans cet exemple de mise en oeuvre, un nouveau microservice 60 transmet à un microservice de sécurité à jetons 30 une demande de rattachement comportant un identifiant unique du nouveau microservice IDMS. Le microservice de sécurité à jeton 30 vérifie cet identifiant unique du nouveau microservice auprès d'un référentiel de sécurité 35. Ce référentiel de sécurité 35 aura par exemple été complété initialement par un administrateur de la plateforme de gouvernance.

Une fois l'identifiant unique du nouveau microservice OK, le microservice de sécurité à jeton 30 transmet au nouveau microservice 60 un jeton d'authentification token1.

Le nouveau microservice 60 peut alors transmettre une requête d'enregistrement REQE accompagnée du jeton d'authentification token1 au module d'enregistrement 90. Le module d'enregistrement 90 pourra vérifier auprès du microservice de sécurité à jeton si le jeton d'authentification token1 est valide et si le nouveau microservice 60 est autorisé à contacter module d'enregistrement 90.

En cas de validation OK, le module d'enregistrement 90 pourra procéder à l'enregistrement du nouveau microservice 60 et en particulier à l'enregistrement des données d'accès au nouveau microservice, tel que représenté par la référence RG sur les figures.

Une fois le nouveau microservice enregistré, un client utilisateur 2 pourra envoyer une demande de service SREQ de préférence auprès du microservice mandataire 20. Le module mandataire 20 pourra à ce stade vérifier si le client utilisateur dispose des autorisations nécessaires à l'utilisation de ce service.

Ensuite, le microservice mandataire 20 pourra commander une demande de service SREQ auprès du module d'enregistrement 90. Le module d'enregistrement pourra alors procéder à plusieurs vérification telle que : vérification de la capacité d'un service à être assuré par un microservice enregistré ; vérification de la disponibilité du service ; et/ou vérification des autorisation du client utilisateur 2. Par exemple si le service peut être assuré par un microservice enregistré et que le client utilisateur 2 dispose des autorisations alors le module d'enregistrement 90 enverra, au microservice mandataire 20, les données d'accès Endpoint Valid au microservice recherché.

Ensuite, dans certains modes de réalisation, le microservice mandataire 20 pourra transmettre au microservice concerné, par exemple le nouveau microservice 60, une requête sur les données d'accès reçues EREQ puis transmettre les ressources ou contenus RES obtenus au client utilisateur 2, par exemple via une interface agrégée 10.

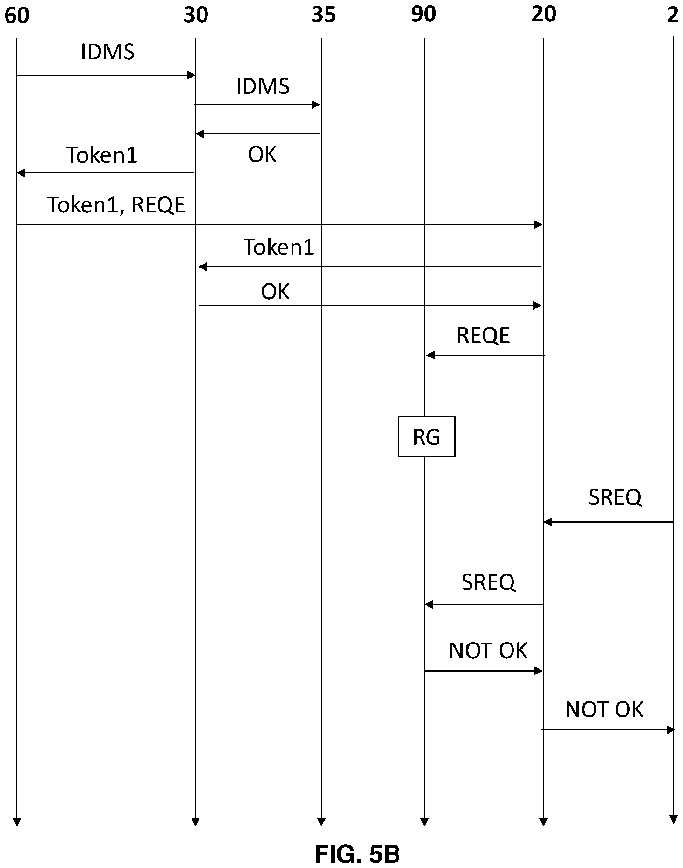

Un autre exemple de mise en oeuvre d'un système informatique d'enregistrement de microservices selon l'invention est illustré à la **figure 5B****.**

Comme précédemment, dans cet exemple de mise en oeuvre, un nouveau microservice 60 transmet à un microservice de sécurité à jetons 30 une demande de rattachement comportant un identifiant unique du nouveau microservice IDMS. Une fois l'identifiant unique du nouveau microservice OK, le microservice de sécurité à jeton 30 transmet au nouveau microservice 60 un jeton d'authentification token1.

Le nouveau microservice 60 peut alors transmettre une requête d'enregistrement REQE accompagnée du jeton d'authentification token1 au microservice mandataire 20. Le microservice mandataire 20 pourra vérifier auprès du microservice de sécurité à jeton si le jeton d'authentification token 1 est valide et si le nouveau microservice 60 est autorisé à contacter un module d'enregistrement 90.

En cas de validation OK, le microservice mandataire 20 pourra transmettre au module d'enregistrement 90 la requête d'enregistrement REQE et le module d'enregistrement 90 pourra procéder à l'enregistrement du nouveau microservice 60 et en particulier à l'enregistrement des données d'accès au nouveau microservice, tel que représenté par la référence RG sur les figures.

Comme précédemment, une fois le nouveau microservice enregistré, un client utilisateur 2 pourra envoyer une demande de service SREQ de préférence auprès du microservice mandataire 20. Ensuite, le microservice mandataire 20 pourra commander une demande de service SREQ auprès du module d'enregistrement 90.

Si le service ne peut pas être assuré par un microservice enregistré et que le client utilisateur 2 dispose des autorisations alors le module d'enregistrement 90 enverra, au microservice mandataire 20, un message d'indisponibilité NOT OK. Ensuite, le microservice mandataire 20 pourra à son tour transmettre au client utilisateur 2, par exemple via une interface agrégée 10, message d'indisponibilité NOT OK.

**Selon un autre aspect,** l'invention porte sur un **système 1 informatique d'enregistrement de microservice** de préférence dans le cadre d'une gouvernance unifiée d'une pluralité de solutions de calcul intensif 70.

En particulier, un système 1 informatique d'enregistrement de nouveau microservices selon l'invention peut comporter : un microservice de sécurité à jeton 30, au moins un référentiel de sécurité 35, 36, 37, un module d'enregistrement 90 et un registre de service 91.

Le système 1 informatique d'enregistrement de nouveau microservices pourra comporter avantageusement : un microservice mandataire 20, au moins un microservice de calcul 50, 51, 52, 53, et un ou plusieurs référentiels d'autorisation.

Considérant l'implémentation du système selon l'invention, celui-ci peut être hébergé par un ou plusieurs serveurs informatiques. Il comporte en particulier un ensemble de microservices tels que des microservices mis en oeuvre selon des protocoles de codage de type node.js ou d'autres technologies telles que Go, Java/Kotlin/Scala, PHP, Python, Pharo, Elixir, Clojure, et Haskell.

Les microservices peuvent utiliser des entités de configuration, telles que des fichiers Json ou des fichiers XML ou des représentations similaires, en tant qu'entrées pour fournir les composants de base de la logique, des transformations, du mappage et de la gestion des clés du système 1.

Chacun des services ou solutions (service de sécurité à jetons, service de gestion, solution de calcul intensif) accessibles via le microservice mandataire 20 peut être pris en charge par un microservice correspondant ou une chaîne de microservices fournissant la logique de mise en oeuvre du service fourni. Dans le cadre du procédé selon l'invention, les microservices peuvent être exécutés individuellement et séparément dans une zone de sécurité en tant que microservice(s).

Un système 1 informatique d'enregistrement de microservice selon l'invention comporte **un module d'enregistrement 90.** Le module d'enregistrement 90 peut correspondre à tout agencement matériel et logiciel apte à permettre l'exécution d'instructions.

Le module d'enregistrement 90 est notamment configuré pour recevoir une requête d'enregistrement d'un nouveau microservice. Cette requête d'enregistrement comporte des données d'accès aux ressources du nouveau microservice mais aussi avantageusement le jeton d'authentification généré.

En outre, un module d'enregistrement 90 selon l'invention sera configuré pour enregistrer des données d'accès aux ressources du nouveau microservice sur un registre de service 91. En effet, le module d'enregistrement 90 est de préférence couplé à un registre de service 91. Le registre de service 91 peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques.

L'enregistrement se fera en particulier lorsque le jeton d'authentification aura été validé, de préférence par le microservice de sécurité à jetons. Ainsi, l'enregistrement pourra être réalisé sur réception d'un message de confirmation du microservice de sécurité à jetons. Alternativement, c'est le microservice mandataire 20 qui pourra être configuré pour réalisé la vérification auprès du microservice de sécurité à jetons et qui transmettra la requête d'enregistrement au module d'enregistrement 90.

En outre, le module d'enregistrement 90 peut être configuré pour gérer en temps réel les microservices de la plateforme de gouvernance (ou système informatique d'enregistrement). Ainsi, le module d'enregistrement 90 peut être configuré pour contacter périodiquement les microservices de façon à identifier des pannes, des déconnexions ou autres malfonctions.

En particulier, un système 1 informatique d'enregistrement de microservice selon l'invention peut comporter **un microservice mandataire** 20, configuré pour recevoir des informations d'accès d'un client utilisateur 2. Le microservice mandataire 20 peut être couplé à un complément permettant de prendre en compte des politiques d'autorisation spécifiques à chaque microservice (logique métier), cela permettant une normalisation des échanges entre le microservice mandataire 20 et le microservice de sécurité à jetons 30. En particulier, cela peut être utilisé pour synchroniser des attributs utilisateurs (potentiellement de nature très différente entre eux) en correspondance avec les rôles spécifiques aux logiques métier/microservices.

Le microservice mandataire 20 est avantageusement configuré pour acheminer les demandes entrantes vers le microservice approprié en fonction du point de terminaison (« endpoint » en terminologie anglosaxonne) spécifié, de la logique et / ou des arguments.

De façon préférée, le microservice mandataire 20 est configuré pour obtenir auprès du module d'enregistrement 90 des données d'accès aux ressources des microservices notamment des microservices de calcul telles que les points de terminaison.

En particulier, les microservices de calcul 50, 51, 52, 53 couplés au microservice mandataire 20 peuvent être configurés pour pointer vers (ou être liés) respectivement à un service particulier ou à un serveur particulier. Ainsi, quand un microservice de calcul est appelé, un service de calcul intensif correspondant est sélectionné.

En outre, le microservice mandataire 20 pourra être configuré pour recevoir un message provenant d'une interface agrégée 10. En particulier, le message provenant de l'interface agrégée 10 peut comporter des informations de commande d'accès d'un client utilisateur 2. Ces informations de commande d'accès pourront correspondre à des paramètres pour lesquels le client utilisateur demande une valeur ou encore à des données que souhaite recevoir le client utilisateur. Le message provenant de l'interface agrégée 10 peut en outre comporter des données d'identifiant du client utilisateur 2.

Le microservice mandataire 20 peut aussi être configuré pour déterminer des données à agréger à partir des données accessibles. La détermination des données accessible est réalisée de préférence par les microservices de calculs, par exemple via la sélection de données mémorisée sur une mémoire de données accessible au microservice de calcul. La détermination des données à agréger pourra par exemple être basée sur des données mémorisées sur un mémoire de données accessible au microservice mandataire 20.

En outre, le microservice mandataire 20 peut être configuré pour recevoir des informations d'accès d'un client utilisateur 2. Le microservice mandataire 20 peut être couplé à un complément permettant de prendre en compte des politiques d'autorisation spécifiques à chaque microservice (logique métier), cela permettant une normalisation des échanges entre le microservice mandataire 20 et le microservice de sécurité à jetons 30. En particulier, cela peut être utilisé pour synchroniser des attributs utilisateurs (potentiellement de nature très différente entre eux) en correspondance avec les rôles spécifiques aux logiques métier/microservices.

En particulier, un système 1 informatique d'enregistrement de microservice selon l'invention comporte **un microservice de sécurité à jeton 30,** configuré pour recevoir les informations d'accès d'un client tel qu'un client utilisateur 2 ou un client tiers 15, pour authentifier le client et pour déterminer au moins un attribut de rôle pour le client à partir des informations d'accès et de données mémorisées dans un référentiel de sécurité 35,36,37.

Le ou les référentiels de sécurité et le référentiel d'autorisation peuvent comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. En outre, ils peuvent comprendre une pluralité d'instructions ou de modules ou d'applications pour effectuer diverses fonctionnalités. Ainsi, le ou les référentiels de sécurité et le référentiel d'autorisation peuvent mettre en oeuvre des routines, des programmes, ou des structures de données de type matricielle.

De façon préférée, le microservice de sécurité à jeton 30 est en outre configuré pour générer un jeton, ledit jeton permettant un accès à toutes les solutions de calcul intensif accessibles au client utilisateur 2 ou au client tiers 15 en fonction de l'au moins un attribut de rôle déterminé.

De façon préférée, bien que le microservice de sécurité à jeton 30 fasse partie d'un système 1 informatique d'enregistrement selon l'invention, il est avantageusement hébergé sur un ou plusieurs dispositifs informatiques (e.g. serveurs) différents distinct du ou des dispositifs informatiques hébergeant le microservice mandataire 20 et/ou les microservices de calcul 50, 51, 52, 53.

Le microservice de sécurité à jeton 30 peut être configuré pour acheminer les demandes entrantes vers le service approprié en fonction du point de terminaison (« endpoint » en terminologie anglosaxonne) spécifié, de la logique et / ou des arguments.

En particulier, le microservice de sécurité à jeton 30 couplé au microservice mandataire 20 peut être configuré pour pointer vers (ou être lié à) un service particulier ou à un serveur particulier. Le microservice de sécurité à jetons 30 peut être configuré pour accéder à une pluralité de référentiels sous la forme d'annuaires, de préférence au moins des référentiels sous la forme d'annuaires de type LDAP 35, Active Directory 36 et Kerberos 37.

En outre, le microservice de sécurité à jetons 30 peut avantageusement être configuré de façon à pouvoir attribuer des rôles partagés ou des rôles spécifiques, de préférence il est configuré de façon à pouvoir attribuer un rôle partagé par tous les microservices de calculs 50, 51, 52, 53.

Le système 1 informatique d'enregistrement de microservice selon l'invention comporte **au moins un microservice de calcul 50, 51, 52, 53** pour chacune des solutions de calcul intensif 70, telle qu'un serveur de calcul haute performance 71, un serveur dédié à l'apprentissage supervisé ou non supervisé 72, un serveur dédié aux calculs quantiques 73. Chacun des microservice de calcul 50, 51, 52, 53 peut être relié à sa solution de calcul intensif respectif dans des canaux sécurisés telles que des connexions ssh ou mobile shell.

De préférence, chacun des microservices de calcul 50, 51, 52, 53, est configuré pour déterminer des autorisations accordées au client utilisateur 2.

En effet, une fois qu'un attribut de rôle a été déterminé celui-ci peut être transféré à un microservice qui pourra, sur la base de la valeur d'attribut de rôle et des données contenues dans un référentiel d'autorisations, déterminer des autorisations accordées au client utilisateur 2.

Chacun des microservices de calcul 50, 51, 52, 53, est configuré pour recevoir des premières données d'exécution d'opérations de calculs intensifs générées par une première solution de calcul intensif et des deuxièmes données d'exécution d'opérations de calcul intensif générées par une deuxième solution de calcul intensif.

De préférence, chacun des microservices de calcul 50, 51, 52, 53, est configuré pour déterminer des autorisations accordées au client utilisateur 2.

En effet, une fois qu'un attribut de rôle a été déterminé celui-ci peut être transféré à un microservice qui pourra, sur la base de la valeur d'attribut de rôle et des données contenues dans un référentiel d'autorisations, déterminer des autorisations accordées au client utilisateur 2.

En particulier, les microservices de calcul 50, 51, 52, 53 couplés au microservice mandataire 20 peuvent être configurés pour pointer vers (ou être liés) respectivement à un service particulier ou à un serveur particulier. Ainsi, quand un microservices de calcul est appelé, un service de calculs intensifs correspondant est sélectionné.

## Revendications

1. Procédé (800) d'enregistrement de microservices dans une plateforme de gouvernance unifiée d'une pluralité de solutions de calcul intensif (70), lesdites solutions de calcul intensif (70) comportant au moins deux solutions sélectionnées parmi : un serveur de calcul haute performance (71), un serveur dédié à l'apprentissage supervisé ou non supervisé (72), et un serveur dédié aux calculs quantiques (73) ;
la plateforme de gouvernance unifiée comportant : un microservice de sécurité à jeton (30), au moins un référentiel de sécurité (35,36,37), un module d'enregistrement (90), un registre de service (91) ; ledit procédé d'enregistrement de microservice comportant les étapes de :
- Réception (820), par le microservice de sécurité à jeton (30), d'une demande de rattachement d'un nouveau microservice (60), ladite demande de rattachement comportant un identifiant unique du nouveau microservice (IDMS) ;
- Vérification (830), par le microservice de sécurité à jeton (30), de l'identifiant unique du nouveau microservice (IDMS) à partir d'informations mémorisées dans le référentiel de sécurité (35,36,37),
- Génération (840) d'un jeton d'authentification (token1) et transmission du jeton d'authentification (token1) au nouveau microservice par le microservice de sécurité à jeton (30), et
- Réception (850), par le module d'enregistrement (90), d'une requête d'enregistrement du nouveau microservice, ladite requête d'enregistrement comportant des données d'accès aux ressources du nouveau microservice et le jeton d'authentification (token1) généré ;
- Vérification (860) du jeton d'authentification généré auprès du microservice de sécurité à jeton (30), et
- Enregistrement (870), par le module d'enregistrement (90), lorsque le jeton d'authentification est validé, des données d'accès aux ressources du nouveau microservice sur le registre de service (91).

2. Procédé (800) d'enregistrement de microservices selon la revendication 1, **caractérisé en ce qu'**il comporte en outre une étape de mise à jour en continu du registre de service (91) et en particulier des données d'accès aux ressources du nouveau microservice.

3. Procédé (800) d'enregistrement de microservices selon l'une des revendications 1 ou 2, **caractérisé en ce que** la demande de rattachement comporte en outre un mot de passe du nouveau microservice et **en ce que** le microservice de sécurité à jeton vérifie également le mot de passe du nouveau microservice.

4. Procédé (800) d'enregistrement de microservices selon l'une quelconque des revendications 1 à 3, **caractérisé en ce que** la demande de rattachement comporte en outre un identifiant d'un administrateur de la plateforme de gouvernance unifiée et un mot de passe pour ledit administrateur de la plateforme de gouvernance unifiée et **en ce que** le microservice de sécurité à jeton vérifie également l'identifiant de l'administrateur de la plateforme de gouvernance unifiée et son mot de passe.

5. Procédé (800) d'enregistrement de microservices selon l'une quelconque des revendications 1 à 4, **caractérisé en ce que** le procédé comporte :
- une étape de réception par le module d'enregistrement (90) de la requête d'enregistrement (REQE) envoyée par le nouveau microservice (60) ;
- une étape d'envoi par le module d'enregistrement (90) du jeton d'authentification (token 1) généré au microservice de sécurité à jeton (30) ; puis
- une étape de vérification (860) du jeton d'authentification généré auprès du microservice de sécurité à jeton (30).

6. Procédé (800) d'enregistrement de microservices selon l'une quelconque des revendications 1 à 4, **caractérisé en ce que** la plateforme de gouvernance unifiée comporte un microservice mandataire (20) et **en ce que** le procédé comporte :
- une étape de réception par le microservice mandataire (20) de la requête d'enregistrement (REQE) envoyée par le nouveau microservice (60) ;
- une étape d'envoi par le microservice mandataire (20) du jeton d'authentification (token 1) généré au microservice de sécurité à jeton (30) ;
- une étape de transmission (865), par le microservice mandataire (20), de la requête d'enregistrement (REQE) au module d'enregistrement (90) lorsque le jeton d'authentification (token1) est validé.

7. Procédé (800) d'enregistrement de microservices selon l'une quelconque des revendications 1 à 6, **caractérisé en ce que** le nouveau microservice est rendu accessible à un client utilisateur (2) au niveau d'une interface agrégée (10) et qu'il comporte une étape de transmission de données de contenu du nouveau microservice à l'interface agrégée (10).

8. Procédé (800) d'enregistrement de microservices selon l'une quelconque des revendications 1 à 7, **caractérisé en ce que** la plateforme de gouvernance unifiée comporte un microservice mandataire (20) et **en ce que** le procédé comporte une étape de transmission (890) des données d'accès aux ressources du nouveau microservice, par le module d'enregistrement (90), au microservice mandataire (20).

9. Procédé (800) d'enregistrement de microservices selon la revendication 8, **caractérisé en ce que** le microservice mandataire (20) est configuré pour, sur réception d'une demande de service (SREQ) d'un client utilisateur (2), transmettre au nouveau microservice (60), une requête (EREQ) sur des données d'accès reçues puis transmettre les ressources ou contenus (RES) obtenus au client utilisateur (2).

10. Système (1) d'enregistrement de microservices dans une plateforme de gouvernance unifiée d'une pluralité de solutions de calcul intensif (70), lesdites solutions de calcul intensif (70) comportant au moins deux solutions sélectionnées parmi : un serveur de calcul haute performance (71), un serveur dédié à l'apprentissage supervisé ou non supervisé (72), et un serveur dédié aux calculs quantiques (73) ;
ledit système (1) d'enregistrement de nouveaux microservices comportant :
- Un référentiel de sécurité (35,36,37) configuré pour mémoriser des informations d'identification de nouveaux microservices ;
- Un registre de service (91) configuré pour mémoriser des données d'accès aux ressources de nouveaux microservices ;
- Un microservice de sécurité à jeton (30), configuré pour :
∘ Recevoir une demande de rattachement d'un nouveau microservice (60), ladite demande de rattachement comportant un identifiant unique du nouveau microservice (IDMS),
∘ Vérifier l'identifiant unique du nouveau microservice (IDMS) à partir d'informations mémorisées dans le référentiel de sécurité (35,36,37),
∘ Générer un jeton d'authentification et transmettre ledit jeton d'authentification au nouveau microservice ; et
- un module d'enregistrement (90), configuré pour :
∘ Recevoir une requête d'enregistrement du nouveau microservice, ladite requête d'enregistrement comportant des données d'accès aux ressources du nouveau microservice et le jeton d'authentification généré ;et Vérifier le jeton d'authentification généré auprès du microservice de sécurité à jeton; et
∘ Enregistrer, lorsque le jeton d'authentification est validé, des données d'accès aux ressources du nouveau microservice sur le registre de service (91).

## Patentansprüche

1. Verfahren (800) zur Registrierung von Mikrodiensten in einer gemeinsamen Verwaltungsplattform einer Vielzahl von HPC-Lösungen (70), wobei die HPC-Lösungen (70) mindestens zwei Lösungen aufweisen, die ausgewählt sind aus: einem HPC-Server (71), einem Server, der für das überwachte oder nicht überwachte Lernen (72) vorgesehen ist, und einem Server, der für Quantenberechnungen (73) vorgesehen ist;
wobei die gemeinsame Verwaltungsplattform Folgendes aufweist: einen Token-Sicherheitsmikrodienst (30), mindestens ein Sicherheitsrepository (35, 36, 37), ein Registrierungsmodul (90), ein Dienstregister (91); wobei das Verfahren zur Registrierung des Mikrodienstes die folgenden Schritte aufweist:
- Empfangen (820), durch den Token-Sicherheitsmikrodienst (30), einer Anfrage zum Anbinden eines neuen Mikrodienstes (60), wobei die Anbindungsanfrage eine eindeutige Kennung des neuen Mikrodienstes (IDMS) aufweist;
- Verifizierung (830) der eindeutigen Kennung des neuen Mikrodienstes (IDMS) durch den Token-Sicherheitsmikrodienst (30) anhand von im Sicherheitsrepository (35, 36, 37) gespeicherten Informationen,
- Generierung (840) eines Authentifizierungstokens (token1) und Übertragung des Authentifizierungstokens (token1) an den neuen Mikrodienst durch den Token-Sicherheitsmikrodienst (30), und
- Empfangen (850), durch das Registrierungsmodul (90), einer Anforderung zur Registrierung des neuen Mikrodienstes, wobei die Registrierungsanforderung Zugriffsdaten auf die Ressourcen des neuen Mikrodienstes und das generierte Authentifizierungstoken (token1) aufweist;
- Verifizierung (860) des generierten Authentifizierungstokens beim Token-Sicherheitsmikrodienst (30), und
- Registrierung (870), durch das Registrierungsmodul (90), wenn das Authentifizierungstoken validiert ist, der Zugriffsdaten auf die Ressourcen des neuen Mikrodienstes auf dem Dienstregister (91).

2. Verfahren (800) zur Registrierung von Mikrodiensten nach Anspruch 1, **dadurch gekennzeichnet, dass** es ferner einen Schritt des kontinuierlichen Aktualisierens des Dienstregisters (91) und insbesondere der Zugriffsdaten auf die Ressourcen des neuen Mikrodienstes aufweist.

3. Verfahren (800) zur Registrierung von Mikrodiensten nach einem der Ansprüche 1 oder 2, **dadurch gekennzeichnet, dass** die Anbindungsanfrage zusätzlich ein Passwort des neuen Mikrodienstes aufweist, **und dass** der Token-Sicherheitsmikrodienst außerdem das Passwort des neuen Mikrodienstes verifiziert.

4. Verfahren (800) zur Registrierung von Mikrodiensten nach einem der Ansprüche 1 bis 3, **dadurch gekennzeichnet, dass** die Anbindungsanfrage zusätzlich eine Kennung eines Administrators der gemeinsamen Verwaltungsplattform und ein Passwort für den Administrator der gemeinsamen Verwaltungsplattform aufweist, **und dass** der Token-Sicherheitsmikrodienst außerdem die Kennung des Administrators der gemeinsamen Verwaltungsplattform und sein Passwort verifiziert.

5. Verfahren (800) zur Registrierung von Mikrodiensten nach einem der Ansprüche 1 bis 4, **dadurch gekennzeichnet, dass** das Verfahren Folgendes aufweist:
- einen Schritt des Empfangens der durch den neuen Mikrodienst (60) gesendeten Registrierungsanforderung (REQE) durch das Registrierungsmodul (90);
- einen Schritt des Sendens des generierten Authentifizierungstokens (token1) durch das Registrierungsmodul (90) an den Token-Sicherheitsmikrodienst (30); dann
- einen Schritt der Verifizierung (860) des generierten Authentifizierungstokens beim Token-Sicherheitsmikrodienst (30).

6. Verfahren (800) zur Registrierung von Mikrodiensten nach einem der Ansprüche 1 bis 4, **dadurch gekennzeichnet, dass** die gemeinsame Verwaltungsplattform einen Proxy-Mikrodienst (20) aufweist **und dadurch, dass** das Verfahren Folgendes aufweist:
- einen Schritt des Empfangens der durch den neuen Mikrodienst (60) gesendeten Registrierungsanforderung (REQE) durch den Proxy-Mikrodienst (20);
- einen Schritt des Sendens des generierten Authentifizierungstokens (token1) durch den Proxy-Mikrodienst (20) an den Token-Sicherheitsmikrodienst (30);
- einen Schritt des Übertragens (865) der Registrierungsanforderung (REQE) durch den Proxy-Mikrodienst (20) an das Registrierungsmodul (90), wenn das Authentifizierungstoken (token1) validiert ist.

7. Verfahren (800) zur Registrierung von Mikrodiensten nach einem der Ansprüche 1 bis 6, **dadurch gekennzeichnet, dass** der neue Mikrodienst einem Benutzerclient (2) im Bereich einer aggregierten Schnittstelle (10) zugänglich gemacht wird, und dass es einen Schritt des Übertragens von Inhaltsdaten des neuen Mikrodienstes an die aggregierte Schnittstelle (10) aufweist.

8. Verfahren (800) zur Registrierung von Mikrodiensten nach einem der Ansprüche 1 bis 7, **dadurch gekennzeichnet, dass** die gemeinsame Verwaltungsplattform einen Proxy-Mikrodienst (20) aufweist, **und dass** das Verfahren einen Schritt des Übertragens (890) der Zugriffsdaten auf die Ressourcen des neuen Mikrodienstes durch das Registrierungsmodul (90) an den Proxy-Mikrodienst (20) aufweist.

9. Verfahren (800) zur Registrierung von Mikrodiensten nach Anspruch 8, **dadurch gekennzeichnet, dass** der Proxy-Mikrodienst (20) so konfiguriert ist, dass er bei Empfang einer Dienstanfrage (SREQ) von einem Benutzerclient (2) eine Anforderung (EREQ) auf empfangene Zugangsdaten an den neuen Mikrodienst (60) übermittelt, dann die erhaltenen Ressourcen oder Inhalte (RES) an den Benutzerclient (2) überträgt.

10. System (1) zur Registrierung von Mikrodiensten in einer gemeinsamen Verwaltungsplattform einer Vielzahl von HPC-Lösungen (70), wobei die HPC-Lösungen (70) mindestens zwei Lösungen aufweisen, die ausgewählt sind aus:
einem HPC-Server (71), einem Server, der für das überwachte oder nicht überwachte Lernen (72) vorgesehen ist, und einem Server, der für Quantenberechnungen (73) vorgesehen ist;
wobei das System (1) zur Registrierung von neuen Mikrodiensten Folgendes aufweist:
- Ein Sicherheitsrepository (35, 36, 37), das so konfiguriert ist, dass es Identifikationsinformationen für neue Mikrodienste speichert;
- Ein Dienstregister (91), das so konfiguriert ist, dass es Zugriffsdaten auf die Ressourcen von neuen Mikrodiensten speichert;
- Ein Token-Sicherheitsmikrodienst (30), der konfiguriert ist zum:
∘ Empfangen einer Anbindungsanfrage eines neuen Mikrodienstes (60), wobei die Anbindungsanfrage eine eindeutige Kennung des neuen Mikrodienstes (IDMS) aufweist,
∘ Verifizieren der eindeutigen Kennung des neuen Mikrodienstes (IDMS) anhand von im Sicherheitsmikrodienst gespeicherten Informationen (35, 36, 37),
∘ Generieren eines Authentifizierungstokens und Übertragen des Authentifizierungstokens an den neuen Mikrodienst; und
- ein Registrierungsmodul (90), das konfiguriert ist zum:
∘ Empfangen einer Anforderung zur Registrierung des neuen Mikrodienstes, wobei die Registrierungsanforderung Zugriffsdaten auf die Ressourcen des neuen Mikrodienstes und das generierte Authentifizierungstoken aufweist; und
Verifizieren des generierten Authentifizierungstokens beim Token-Sicherheitsmikrodienst; und
∘ Registrieren, wenn das Authentifizierungstoken validiert ist, der Zugriffsdaten auf die Ressourcen des neuen Mikrodienstes im Dienstregister (91).

## Claims

1. A method (800) for registering microservices in a unified governance platform with a plurality of compute-intensive solutions (70), said compute-intensive solutions (70) including at least two solutions selected from: a high performance computing server (71), a server dedicated to supervised or unsupervised learning (72), and a server dedicated to quantum computing (73);
the unified governance platform including: a token security microservice (30), at least one security referential (35,36,37), a registration module (90), a service registry (91); said microservice registration method including the steps of:
- Receiving (820), by the token security microservice (30), a request to attach a new microservice (60), said attachment request including a unique identifier for the new microservice (IDMS);
- Verifying (830), by the token security microservice (30), the unique identifier of the new microservice (IDMS) from information stored in the security repository (35,36,37),
- Generating (840) an authentication token (token 1) and transmitting the authentication token (token1) to the new microservice by the token security microservice (30), and
- Receiving (850), by the registration module (90), a request for registering the new microservice, said registration request including data for accessing the resources of the new microservice and the authentication token (token1) generated;
- Verifying (860) the authentication token generated by the token security microservice (30), and
- Registering (870), by the registration module (90), when the authentication token is validated, the data for accessing the resources of the new microservice on the service registry (91).

2. The method (800) for registering microservices according to claim 1, **characterized in that it** further includes a step of continuously updating the service registry (91) and in particular data for accessing the resources of the new microservice.

3. The method (800) for registering microservices according to one of claims 1 or 2, **characterized in that** the attachment request further includes a password for the new microservice **and in that** the token security microservice also checks the password of the new microservice.

4. The method (800) for registering microservices according to any one of claims 1 to 3, **characterized in that** the attachment request further includes an identifier of a unified governance platform administrator and a password for said unified governance platform administrator **and in that** the token security microservice also verifies the identifier of the unified governance platform administrator and their password.

5. The method (800) for registering microservices according to any one of claims 1 to 4, **characterized in that** the method includes:
- a step of receiving by the registration module (90) the registration request (REQE) sent by the new microservice (60);
- a step of sending by the registration module (90) the authentication token (token1) generated to the token security microservice (30); then
- a step of checking (860) the authentication token generated by the token security microservice (30).

6. The method (800) for registering microservices according to any one of claims 1 to 4, **characterized in that** the unified governance platform includes a proxy microservice (20) **and in that** the method includes:
- a step of receiving by the proxy microservice (20) the registration request (REQE) sent by the new microservice (60);
- a step of sending by the proxy microservice (20) the authentication token (token1) generated to the token security microservice (30);
- a step of transmitting (865), by the proxy microservice (20), the registration request (REQE) to the registration module (90) when the authentication token (token1) is validated.

7. The method (800) for registering microservices according to any one of claims 1 to 6, **characterized in that** the new microservice is rendered accessible to a user client (2) at an aggregated interface (10) and that it includes a step of transmitting content data of the new microservice to the aggregated interface (10).

8. The method (800) for registering microservices according to any one of claims 1 to 7, **characterized in that** the unified governance platform includes a proxy microservice (20) **and in that** the method includes a step of transmitting (890) data for accessing the resources of the new microservice, by the registration module (90), to the proxy microservice (20).

9. The method (800) for registering microservices according to claim 8, **characterized in that** the proxy microservice (20) is configured, upon receipt of a service request (SREQ) from a user client (2), to transmit to the new microservice (60), a request (EREQ) about access data received and then to transmit the resources or contents (RES) obtained to the user client (2).

10. A system (1) for registering microservices in a unified governance platform with a plurality of compute-intensive solutions (70), said compute-intensive solutions (70) including at least two solutions selected from: a high performance computing server (71), a server dedicated to supervised or unsupervised learning (72), and a server dedicated to quantum computing (73);
said system (1) for registering new microservices including:
- A security registry (35,36,37) configured to store identification information for the new microservices;
- A service registry (91) configured to store data for accessing the resources of the new microservices;
- A token security microservice (30), configured to:
∘ Receive a request to attach a new microservice (60), said attachment request including a unique identifier for the new microservice (IDMS),
∘ Verify the unique identifier for the new microservice (IDMS) from information stored in the security registry (35,36,37),
∘ Generate an authentication token and transmit said authentication token to the new microservice; and
- a registration module (90), configured to:
∘ Receive a request for registering the new microservice, said registration request including data for accessing the resources of the new microservice and the authentication token generated; and
Verify the authentication token generated by the token security microservice; and
o Register, when the authentication token is validated, the data for accessing the resources of the new microservice on the service registry (91).
